# EUROPÄISCHE PATENTANMELDUNG

(11) **EP 3 121 068 A1**
(43) Veröffentlichungstag der Anmeldung: **25.01.2017**
(21) Anmeldenummer: 16170368.1
(22) Anmeldetag: 19.05.2016
(51) Int. Cl.: B60R 25/24

(54) **POSITIONSBESTIMMUNG MIT EINEM MAGNETFELDSENSOR FÜR EIN FAHRZEUG**

(30) Priorität: 22.07.2015 DE 102015213806
(71) Anmelder: Volkswagen Aktiengesellschaft, 38440 Wolfsburg (DE)
(72) Erfinder: Haupt, Hannes, 38106 Braunschweig (DE); Bartels, Bastian, 38442 Wolfsburg (DE)

(57) **Zusammenfassung**

Zum Bestimmen einer Position einer tragbaren Vorrichtung (30) relativ zu einem Fahrzeug (10) werden folgende Schritte durchgeführt:
Erzeugen eines magnetischen Feldes mittels des Fahrzeugs (10).

Erfassen des magnetischen Feldes mittels eines Magnetfeldsensors (1) der tragbaren Vorrichtung (30).

Auswerten des magnetischen Feldes, um dadurch die Position der tragbaren Vorrichtung (30) relativ zu dem Fahrzeug (10) zu bestimmen.

## Beschreibung

Die vorliegende Erfindung betrifft die Bestimmung einer Position einer tragbaren Vorrichtung relativ zu einem Fahrzeug mit einem Magnetfeldsensor.

Die US 2014/0266594 A1 beschreibt eine Technik, um ein Fahrzeug mit einer tragbaren Vorrichtung zu starten.

Die DE 197 12 911 A1 offenbart einen Magnetfeldsensor eines Fahrzeugs als Teil eines schlüssellosen Zugangssystems des Fahrzeugs.

Die JP2003058795 A beschreibt ein System zum Verleihen eines Fahrzeugs, wobei Informationen mittels eines Magnetfelds übertragen werden.

In vielen Fahrzeugen ist nach dem Stand der Technik ein PKE-System ("Passive Keyless Entry / Go"-System) verbaut, welches einem Kunden die Nutzung des Fahrzeugs ermöglicht, wobei der Kunde einen für das Fahrzeug berechtigten Schlüssel nur mitführen, aber nicht betätigen muss, um bestimmte Funktionen des Fahrzeugs zu aktivieren. Ohne die Mitführung dieses für das Fahrzeug berechtigten Schlüssels kann das Fahrzeug allerdings nicht genutzt werden.

Die vorliegende Erfindung stellt sich daher die Aufgabe, das Fahrzeug anstelle des Schlüssels mit einer anderen tragbaren Vorrichtung, insbesondere einem Smartphone, nutzen zu können.

Erfindungsgemäß wird diese Aufgabe durch ein Verfahren zum Bestimmen einer Position einer tragbaren Vorrichtung relativ zu einem Fahrzeug nach Anspruch 1, durch ein Verfahren zur Aktivierung einer Fahrzeugfunktion nach Anspruch 8, durch eine tragbare Vorrichtung nach Anspruch 9, durch ein System nach Anspruch 10 und durch ein Computerprogrammprodukt nach Anspruch 14 gelöst. Die abhängigen Ansprüche definieren bevorzugte und vorteilhafte Ausführungsformen der vorliegenden Erfindung.

Im Rahmen der vorliegenden Erfindung wird ein Verfahren zum Bestimmen einer Position einer tragbaren Vorrichtung, insbesondere eines Smartphones, relativ zu einem Fahrzeug bereitgestellt. Dabei umfasst das erfindungsgemäße Verfahren folgende Schritte:
- Erzeugen eines Magnetfelds durch das Fahrzeug. Das Fahrzeug erzeugt insbesondere mit seinen LF-Antennen ("Low Frequency"; LF-Antennen arbeiten im kHz-Bereich) ein Wechselfeld, z.B. ein elektromagnetisches Feld. Dieses elektromagnetische Feld weist quasi als Bestandteil oder Anteil das besagte Magnetfeld auf.
- Erfassen des Magnetfelds bzw. magnetischen Feldes mit Hilfe eines Magnetfeldsensors der tragbaren Vorrichtung.
- Auswerten des erfassten Magnetfelds, um dadurch die Position der tragbaren Vorrichtung innerhalb des Magnetfelds und damit relativ zu dem Fahrzeug zu bestimmen. Bei Kenntnis der Lage und der Ausmaße des elektromagnetischen Feldes und damit des Magnetfelds und bei Kenntnis der Position des Fahrzeugs innerhalb des Magnetfelds kann durch die Bestimmung der Position der tragbaren Vorrichtung innerhalb des Magnetfelds auch die Position der tragbaren Vorrichtung relativ zu dem Fahrzeug bestimmt werden.

Während nach dem Stand der Technik LF-Antennen eines Funkschlüssels zum Erfassen des elektromagnetischen Feldes des Fahrzeugs und damit zur Positionsbestimmung eingesetzt werden, wird erfindungsgemäß das elektromagnetische Feld (genauer der Magnetfeldanteil des elektromagnetischen Feldes) mit einem Magnetfeldsensor erfasst. Da dieser Magnetfeldsensor zur Realisierung beispielsweise einer Kompassfunktion in den meisten Smartphones vorhanden ist, ist vorteilhafterweise keine Hardware-Änderung eines Smartphones zur Realisierung der vorliegenden Erfindung erforderlich. Der Einsatz von Antennen zur Positionsbestimmung relativ zum Fahrzeug ist seitens der tragbaren Vorrichtung somit nicht erforderlich, so dass die im Rahmen der Erfindung beschriebene tragbare Vorrichtung vorteilhafterweise keine Antenne zur Positionsbestimmung relativ zum Fahrzeug umfasst. Insbesondere ist der Einsatz von LF-Antennen seitens der tragbaren Vorrichtung nicht erforderlich, so dass die im Rahmen der Erfindung beschriebene tragbare Vorrichtung vorteilhafterweise keine LF-Antenne umfasst.

Gemäß einer bevorzugten erfindungsgemäßen Ausführungsform kann das Erdmagnetfeld bei der Auswertung des magnetischen Feldes berücksichtigt werden. Bei dieser Ausführungsform wird beispielsweise im Rahmen eines Kalibrierungsvorgangs das Erdmagnetfeld erfasst oder die Ergebnisse einer Kartographie des Erdmagnetfelds eingelesen, um dann die Auswertung des erfassten magnetischen Feldes abhängig von dem Erdmagnetfeld vornehmen zu können. Bei dieser Ausführungsform werden die von dem Magnetfeldsensor erfassten Messergebnisse quasi als Überlagerung des von dem Fahrzeug erzeugten magnetischen Feldes und des Erdmagnetfelds interpretiert. Bei Kenntnis des Erdmagnetfelds kann somit der Anteil des Erdmagnetfelds am jeweiligen Messergebnis herausgerechnet werden, um allein den Anteil des von dem Fahrzeug erzeugten magnetischen Feldes bei der Auswertung zu berücksichtigen.

Der Magnetfeldsensor ist dabei insbesondere ausgestaltet, um nur eine Magnetfeldkomponente eines elektromagnetischen Feldes als das magnetische Feld zu erfassen. Mit anderen Worten ist der Magnetfeldsensor vorteilhafterweise ausgestaltet, um nur die Magnetfeldkomponente(n) (und nicht eine elektrische oder elektromagnetische Feldkomponente) des von dem Fahrzeug erzeugten elektromagnetischen Feldes zu erfassen. Anders ausgedrückt ist der Magnetfeldsensor in der Lage, auch die Stärke und die Richtung eines statischen Magnetfelds zu erfassen.

Als Magnetfeldsensor kann dabei ein Hall-Sensor oder ein so genannter xMR-Sensor eingesetzt werden.

Ein Hall-Sensor basiert dabei insbesondere auf dem Hall-Effekt. Unter einem xMR-Sensor wird dabei insbesondere ein Dünnschicht-Sensor verstanden, der unter dem Einfluss des magnetischen Flusses des Magnetfelds seinen (ohmschen) Widerstand ändert. Ein xMR-Sensor wird auch als x-magnetoresistiv bezeichnet. Man unterscheidet beispielsweise AMR-Sensoren (welche auf dem anisotropen magnetoresistiven Effekt basieren), CMR-Sensoren (welche auf dem kolossalen magnetoresistiven ("Colossal MagnetoResistiv") Effekt basieren), GMR-Sensoren (welche auf dem GMR-Effekt oder dem Riesenmagnetowiderstand ("Giant MagnetoResitance") basieren) und TMR-Sensoren (welche auf dem magnetischen Tunnelwiderstand oder TMR-Effekt basieren).

In aller Regel umfasst die tragbare Vorrichtung Sendemittel, um eine Funkstrecke zu dem Fahrzeug aufzubauen und um die Position der tragbaren Vorrichtung oder die Messergebnisse des Magnetfeldsensors bzw. Feldstärken des magnetischen Feldes über diese Funkstrecke an das Fahrzeug zu übertragen. Diese Funkstrecke basiert beispielsweise auf Bluetooth, WLAN, GSM und/oder Mobilfunk. Die Übertragung der Magnetfeld-Messwerte erfolgt dabei insbesondere auf eine integere und authentische Art und Weise, wodurch das Fahrzeug in der Lage ist, nachzuprüfen oder zu verifizieren, dass die Messergebnisse unverfälscht (integer) sind und auch von der richtigen tragbaren Vorrichtung (authentisch) stammen. Dazu kann die tragbare Vorrichtung bei der Übertragung der Messergebnisse mit einem kryptografischen Geheimnis arbeiten (z.B. können die Messergebnisse mit Hilfe dieses kryptografischen Geheimnisses verschlüsselt werden), welches auch dem Fahrzeug bekannt ist.

Über diese Funkstrecke kann auch abhängig von der Position der tragbaren Vorrichtung relativ zu dem Fahrzeug mittels eines Challenge-Response-Verfahrens überprüft werden, ob die tragbare Vorrichtung eine Berechtigung für das Fahrzeug aufweist.

Bei diesem Challenge-Response-Verfahren sendet das Fahrzeug über die Funkstrecke beispielsweise eine Anfrage (Challenge), abhängig von welcher die tragbare Vorrichtung nachweist, dass die tragbare Vorrichtung eine bestimmte Information besitzt, ohne diese Information dabei selbst preiszugeben. Beispielsweise kann die Anfrage eine bestimmte Zeichenfolge umfassen, welche dann von der tragbaren Vorrichtung anhand eines bestimmten Algorithmus, welcher mit einem vorbestimmten Kennwort arbeitet, umgesetzt und an das Fahrzeug zurück übertragen wird. Anhand der Antwort der tragbaren Vorrichtung kann das Fahrzeug überprüfen, ob die tragbare Vorrichtung die bestimmte Information (das bestimmte Kennwort) kennt und damit für das Fahrzeug berechtigt ist.

Darüber hinaus wird im Rahmen der vorliegenden Erfindung ein Verfahren zur Aktivierung einer Fahrzeugfunktion bereitgestellt, welches folgende Schritte umfasst:
- Bestimmen einer Position einer tragbaren Vorrichtung (insbesondere eines Smartphones) relativ zu dem Fahrzeug gemäß dem vorab beschriebenen erfindungsgemäßen Verfahren zum Bestimmen der Position der tragbaren Vorrichtung.
- Erfassen einer Berechtigung der tragbaren Vorrichtung für das Fahrzeug. Anhand dieses Schritts wird überprüft, ob die tragbare Vorrichtung für das Fahrzeug berechtigt ist, was beispielsweise anhand des vorab beschriebenen Challenge-Response-Verfahren durchgeführt werden kann.
- Aktivieren der Fahrzeugfunktion in Abhängigkeit von der erfassten Berechtigung und der bestimmten Position. D.h. das Aktivieren der oder einer bestimmten Fahrzeugfunktion ist nur möglich, wenn zum einen die tragbare Vorrichtung für das Fahrzeug berechtigt ist, und wenn zum anderen die Position der tragbaren Vorrichtung relativ zum Fahrzeug der bestimmten Funktion entspricht.

Zur Aktivierung bestimmter Fahrzeugfunktionen ist die Kenntnis der Position der tragbaren Vorrichtung relativ zu dem Fahrzeug erforderlich. Beispielsweise kann ein Antriebsmotor des Fahrzeugs in der Regel nur dann gestartet werden, wenn die für das Fahrzeug berechtigte tragbare Vorrichtung innerhalb des Fahrzeugs erfasst wird. Indem das erfindungsgemäße Verfahren zur Aktivierung der Fahrzeugfunktion das erfindungsgemäße Verfahren zum Bestimmen der Position der tragbaren Vorrichtung relativ zu dem Fahrzeug einsetzt, gelten die vorab beschriebenen Vorteile (z.B. Einsatz eines handelsüblichen Smartphones) auch für das erfindungsgemäße Verfahren zur Aktivierung der Fahrzeugfunktionen.

Im Rahmen der vorliegenden Erfindung wird auch eine tragbare Vorrichtung (insbesondere ein Smartphone) bereitgestellt, welche einen Magnetfeldsensor und Auswertemittel umfasst. Dabei ist der Magnetfeldsensor ausgestaltet, um ein magnetisches Feld (insbesondere als Magnetfeldanteil eines von einem Fahrzeug erzeugten elektromagnetischen Feldes) zu erfassen. Die Auswertemittel sind ausgestaltet, um in Abhängigkeit von Messergebnissen des von dem Magnetfeldsensor erfassten magnetischen Feldes eine Position der tragbaren Vorrichtung innerhalb des magnetischen Feldes zu bestimmen.

Die tragbare Vorrichtung ist vorteilhafterweise in der Lage, mit Hilfe ihres Magnetfeldsensors ihre Position innerhalb des Magnetfelds und damit innerhalb eines elektromagnetischen Feldes zu bestimmen. Wenn die Lage des Erzeugers (z.B. eines Fahrzeugs) des elektromagnetischen Feldes und damit des magnetischen Feldes bzw. Magnetfelds innerhalb dieses Magnetfelds bekannt ist, kann die tragbare Vorrichtung vorteilhafterweise anhand ihrer Position innerhalb des Magnetfelds auch ihre Position relativ zu dem Erzeuger (z.B. Fahrzeug) bestimmen.

Des Weiteren wird im Rahmen der vorliegenden Erfindung ein System bereitgestellt, welches ein Fahrzeug, eine tragbare Vorrichtung und Auswertemittel umfasst. Dabei umfasst das Fahrzeug eine oder mehrere Antennen (z.B. LF-Antennen), um ein elektromagnetisches Feld zu erzeugen. Die tragbare Vorrichtung umfasst einen Magnetfeldsensor, um mit diesem Magnetfeldsensor ein magnetisches Feld als Magnetfeldanteil des elektromagnetischen Feldes zu erfassen. Die Auswertemittel sind ausgestaltet, um abhängig von Messergebnissen (z.B. gemessenen Feldstärken) des von dem Magnetfeldsensor erfassten magnetischen Feldes die Position der tragbaren Vorrichtung innerhalb des magnetischen Feldes und damit relativ zu dem Fahrzeug zu bestimmen.

Die Vorteile des erfindungsgemäßen Systems entsprechen im Wesentlichen den Vorteilen des erfindungsgemäßen Verfahrens, welche vorab im Detail ausgeführt sind, so dass Sie auf eine Wiederholung verzichtet wird.

Erfindungsgemäß existieren folgende Ausführungsformen für das System:
- Gemäß einer ersten Ausführungsform sind die Auswertemittel innerhalb der tragbaren Vorrichtung angeordnet, so dass bei dieser Ausführungsform die erfassten Feldstärken innerhalb der tragbaren Vorrichtung ausgewertet und die Position relativ zu dem Fahrzeug innerhalb der tragbaren Vorrichtung bestimmt wird.
- Gemäß einer zweiten Ausführungsform sind die Auswertemittel innerhalb des Fahrzeugs angeordnet. Bei dieser zweiten Ausführungsform umfasst die tragbare Vorrichtung Sendemittel, um die Messergebnisse bzw. Rohdaten des Magnetfeldsensors an Empfangsmittel des Fahrzeugs und damit an das Fahrzeug zu übertragen. Bei dieser zweiten Ausführungsform werden die Messergebnisse innerhalb des Fahrzeugs ausgewertet und somit die Position der tragbaren Vorrichtung relativ zu dem Fahrzeug innerhalb des Fahrzeugs bestimmt.

Im Rahmen der vorliegenden Erfindung kann auch ein Fahrzeug bereitgestellt werden, welches eine oder mehrere Antennen, um ein elektromagnetisches Feld zu erzeugen, Empfangsmittel und Auswertemittel umfasst. Die Empfangsmittel sind ausgestaltet, um über Funk Messergebnisse oder Rohdaten eines Magnetfeldssensors einer tragbaren Vorrichtung, welche sich insbesondere innerhalb des elektromagnetischen Feldes befindet, zu empfangen. Die Auswertemittel sind ausgestaltet, um abhängig von den Messergebnissen des Magnetfeldsensors die Position der tragbaren Vorrichtung innerhalb des elektromagnetischen Feldes und damit relativ zu dem Fahrzeug zu bestimmen.

Das erfindungsgemäße Fahrzeug ist insbesondere zur Durchführung der vorab beschriebenen erfindungsgemäßen Verfahren ausgestaltet.

Schließlich wird im Rahmen der vorliegenden Erfindung ein Computerprogrammprodukt, insbesondere ein Computerprogramm oder eine Software, welche man in einen Speicher einer tragbaren Vorrichtung laden kann, bereitgestellt. Mit diesem Computerprogrammprodukt können alle oder verschiedene vorab beschriebene Ausführungsformen der erfindungsgemäßen Verfahren ausgeführt werden, wenn das Computerprogrammprodukt in der Steuerung der tragbaren Vorrichtung läuft. Dabei benötigt das Computerprogrammprodukt eventuell Programmmittel, z.B. Bibliotheken und Hilfsfunktionen, um die entsprechenden Ausführungsformen der Verfahren zu realisieren. Mit anderen Worten soll mit dem auf das Computerprogrammprodukt gerichteten Anspruch insbesondere ein Computerprogramm oder eine Software unter Schutz gestellt werden, mit welcher eine der oben beschriebenen Ausführungsformen des erfindungsgemäßen Verfahrens zum Bestimmen einer Position einer tragbaren Vorrichtung relativ zu einem Fahrzeug oder des erfindungsgemäßen Verfahrens zur Aktivierung einer Fahrzeugfunktion mit der tragbaren Vorrichtung durchgeführt werden kann. Dabei kann es sich bei der Software um einen Quellcode (z.B. C++), der noch compiliert (übersetzt) und gebunden oder der nur interpretiert werden muss, oder um einen ausführbaren Softwarecode handeln, der zur Ausführung nur noch in die entsprechende Recheneinheit bzw. Steuereinrichtung zu laden ist.

Mit der vorliegenden Erfindung kann vorteilhafterweise ein handelsübliches Smartphone mit einem Magnetfeldsensor eingesetzt werden, um die Position des Smartphones relativ zum Fahrzeug zu bestimmen. Dabei erzeugen die im Fahrzeug verbauten LF-Antennen zur Schlüsselsuche eine Sequenz aus elektromagnetischen Feldern. Diese Felder enthalten eine starke magnetische Komponente, welche mit dem Magnetfeldsensor des Smartphones erfasst und zur Positionsbestimmung relativ zum Fahrzeug ausgewertet werden kann. Der Magnetfeldsensor (oder Kompass) in der tragbaren Vorrichtung bzw. im Smartphone wird durch den Magnetfeldanteil der von den LF-Antennen des Fahrzeugs erzeugten elektromagnetischen Felder verstimmt, wobei Ausmaße dieser Verstimmung erfasst und mit einem geeigneten Algorithmus ausgewertet werden, um dadurch die Position der tragbaren Vorrichtung innerhalb des Feldes und damit relativ zu dem Fahrzeug zu bestimmen.

Die vorliegende Erfindung ist insbesondere für Kraftfahrzeuge geeignet. Selbstverständlich ist die vorliegende Erfindung nicht auf den bevorzugten Anwendungsbereich eingeschränkt, sondern kann auch für Schiffe oder Flugzeuge sowie gleisgebundene oder spurgeführte Fahrzeuge eingesetzt werden. Selbst der Einsatz für stationäre Objekte (z.B. bei der Gebäudetechnik) ist denkbar.

Im Folgenden wird die vorliegende Erfindung anhand bevorzugter erfindungsgemäßer Ausführungsformen mit Bezug zu den Figuren im Detail beschrieben.

In Fig. 1 sind tragbare Vorrichtungen an verschiedenen Positionen innerhalb eines von einem Fahrzeug erzeugten elektromagnetischen Felds dargestellt.

In Fig. 2 sind eine erfindungsgemäße tragbare Vorrichtung und ein erfindungsgemäßes System schematisch dargestellt.

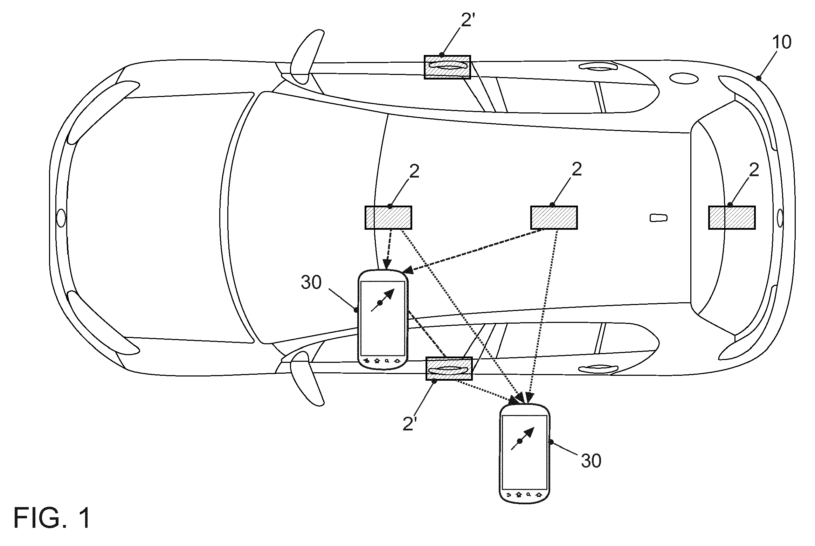

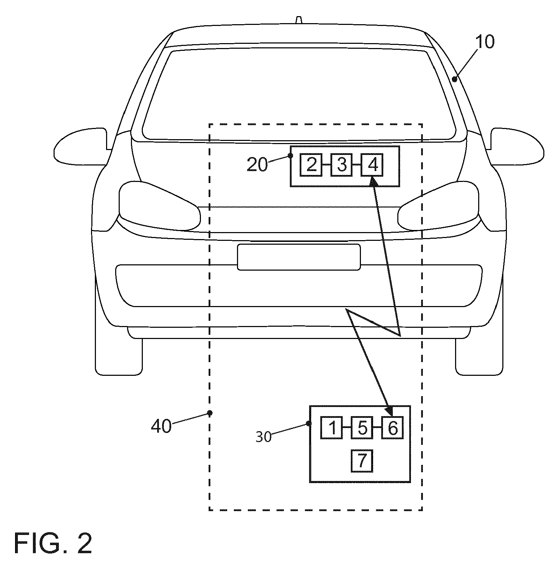

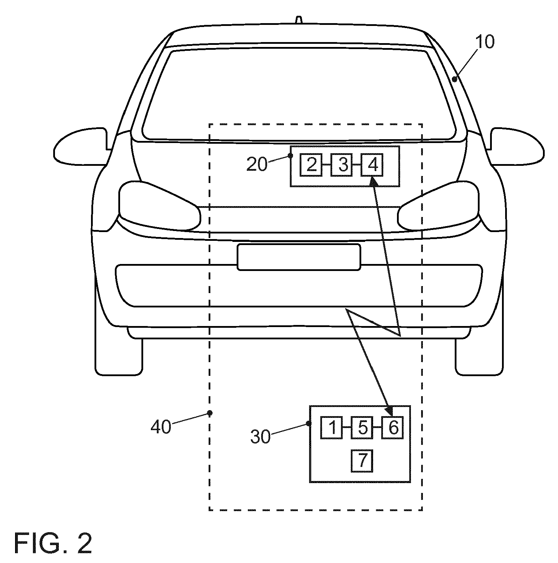

In Fig. 1 ist ein Fahrzeug 10 dargestellt, welches drei LF-Innenantennen 2 und in der Nähe von Türgriffen des Fahrzeugs 10 zwei LF-Außenantennen 2' umfasst. Darüber hinaus sind in Fig. 1 mobile Endgeräte (tragbare Vorrichtungen) 30 an zwei verschiedenen Positionen (einmal im Fahrzeuginnenraum und einmal außerhalb des Fahrzeugs 10) dargestellt. Mit Hilfe ihrer fünf LF-Antennen 2, 2' erzeugt das Fahrzeug 10 ein elektromagnetisches Feld. Die tragbare Vorrichtung 30 erfasst mit Hilfe ihres Magnetfeldsensors (siehe Fig. 2) die Magnetfeldkomponente dieses elektromagnetischen Feldes. Beispielsweise anhand eines zeitlichen Verlaufs der Feldstärke und/oder Richtung dieser Magnetfeldkomponente kann die Position der tragbaren Vorrichtung 30 innerhalb des elektromagnetischen Feldes bestimmt werden. Da auch die Position des Fahrzeugs 10 innerhalb des elektromagnetischen Feldes bekannt ist, kann somit durch die Position der tragbaren Vorrichtung 30 innerhalb des elektromagnetischen Feldes auch die Position der tragbaren Vorrichtung 30 relativ zu dem Fahrzeug 10 bestimmt werden.

Bei dem in Fig. 1 dargestellten Beispiel kann somit für die beiden dargestellten Positionen der tragbaren Vorrichtung 30 erfindungsgemäß bestimmt werden, ob sich die tragbare Vorrichtung 30 innerhalb oder außerhalb des Fahrzeugs 10 befindet. Dazu erfasst der Magnetfeldsensor oder Kompasssensor des mobilen Endgeräts 30 den Magnetfeldanteil des von der jeweiligen LF-Antenne 2, 2' erzeugten Feldes. Das mobile Endgerät 30 kann dann anhand der Messergebnisse seines Magnetfeldsensors seine Position bezüglich der jeweiligen LF-Antenne 2, 2' und dadurch seine Position bezüglich des Fahrzeugs 10 ermitteln.

In Fig. 2 sind schematisch ein Fahrzeug 10, eine Vorrichtung 20 innerhalb des Fahrzeugs 10, eine tragbare Vorrichtung 30 und ein System 40, welches die Vorrichtung 20 und die tragbare Vorrichtung 30 umfasst, dargestellt. Die Vorrichtung 20 des Fahrzeugs 10 umfasst ihrerseits neben einer Steuerung 3 eine LF-Antenne 2 und eine Bluetooth-Antenne 4. Die tragbare Vorrichtung 30 umfasst neben einer Steuerung 5 einen Magnetfeldsensor 1, eine Bluetooth-Antenne 6 und einen Speicher 7, in welchem beispielsweise eine Software in Form eines erfindungsgemäßen Verfahrens gespeichert werden kann.

Um unterscheiden zu können, ob sich ein für das Fahrzeug 10 berechtigter Schlüssel (oder eine für das Fahrzeug 10 berechtigte tragbare Vorrichtung 30) innerhalb oder außerhalb des Fahrzeugs 10 befindet, erzeugt die LF-Antenne 2 ein elektromagnetisches Feld. Die Magnetfeldkomponente dieses elektromagnetischen Feldes wird mit dem Magnetfeldsensor 1 erfasst. Die tragbare Vorrichtung 30 überträgt über die entsprechende Funkstrecke (im dargestellten Beispiel über die Bluetooth-Antennen 4, 6) entweder die Position relativ zum Fahrzeug 10 (insbesondere die Information, ob sich die tragbare Vorrichtung 30 innerhalb oder außerhalb des Fahrzeugs 10 befindet, oder Informationen über die Messergebnisse seines Magnetfeldsensors 1 an das Fahrzeug 10. Im zweiten Fall ermittelt das Fahrzeug 10 anhand der Informationen über die Messergebnisse die Position der tragbaren Vorrichtung 30 (insbesondere ob sich die tragbare Vorrichtung 30 innerhalb oder außerhalb des Fahrzeugs 10 befindet). Darüber hinaus wird durch eine Kommunikation über diese Funkstrecke seitens des Fahrzeugs 10 bzw. seitens der Vorrichtung 20 im Fahrzeug 10 ermittelt, ob die tragbare Vorrichtung 30 eine Berechtigung für das Fahrzeug 10 aufweist. Abhängig von der übertragenen Position (insbesondere der Information, ob sich die tragbare Vorrichtung 30 innerhalb oder außerhalb des Fahrzeugs 10 befindet) und der Berechtigung gibt das Fahrzeug 10 bestimmte Fahrzeugfunktionen zur Aktivierung frei.

### Bezugszeichenliste

- 1: Magnetfeldsensor
- 2, 2': LF-Antenne
- 3: Steuerung
- 4: Antenne
- 5: Steuerung
- 6: Antenne
- 7: Speicher
- 10: Fahrzeug
- 20: Vorrichtung
- 30: Smartphone
- 40: System

## Patentansprüche

1. Verfahren zum Bestimmen einer Position einer tragbaren Vorrichtung (30) relativ zu einem Fahrzeug (10), folgende Schritte umfassend:
Erzeugen eines magnetischen Feldes mittels des Fahrzeugs (10),
Erfassen des magnetischen Feldes mittels eines Magnetfeldsensors (1) der tragbaren Vorrichtung (30), und
Auswerten des magnetischen Feldes, um dadurch die Position der tragbaren Vorrichtung (30) relativ zu dem Fahrzeug (10) zu bestimmen.

2. Verfahren nach Anspruch 1,
**dadurch gekennzeichnet,**
**dass** das Auswerten des magnetischen Feldes eine Berücksichtigung des Erdmagnetfelds umfasst.

3. Verfahren nach Anspruch 1 oder 2,
**dadurch gekennzeichnet,**
**dass** die tragbare Vorrichtung ein Smartphone (30) ist.

4. Verfahren nach einem der vorhergehenden Ansprüche,
**dadurch gekennzeichnet,**
**dass** der Magnetfeldsensor (1) ausgestaltet ist, um nur eine Magnetfeldkomponente eines elektromagnetischen Feldes als das magnetische Feld zu erfassen.

5. Verfahren nach einem der vorhergehenden Ansprüche,
**dadurch gekennzeichnet,**
**dass** der Magnetfeldsensor (1) einen Hall-Sensor oder einen xMR-Sensor umfasst.

6. Verfahren nach einem der vorhergehenden Ansprüche,
**dadurch gekennzeichnet,**
**dass** die Position der tragbaren Vorrichtung (30) oder Messergebnisse des Magnetfeldsensors (1) über eine Funkstrecke von der tragbaren Vorrichtung (30) an das Fahrzeug (10) übertragen werden, und,
**dass** die Funkstrecke auf Bluetooth, WLAN, GSM und/oder Mobilfunk basiert.

7. Verfahren nach Anspruch 6,
**dadurch gekennzeichnet,**
**dass** eine Berechtigung der tragbaren Vorrichtung (30) für das Fahrzeug (10) durch ein Challenge-Response-Verfahren über die Funkstrecke abhängig von der Position der tragbaren Vorrichtung (30) überprüft wird.

8. Verfahren zur Aktivierung einer Fahrzeugfunktion, folgende Schritte umfassend:
Bestimmen einer Position einer tragbaren Vorrichtung (30) relativ zu dem Fahrzeug (10) durch das Verfahren nach einem der vorhergehenden Ansprüche,
Erfassen einer Berechtigung der tragbaren Vorrichtung (30), und
Aktivieren der Fahrzeugfunktion abhängig von der Berechtigung und der Position.

9. Tragbare Vorrichtung, welche einen Magnetfeldsensor (1) und Auswertemittel (5) umfasst, wobei der Magnetfeldsensor (1) ausgestaltet ist, um ein magnetisches Feld zu erfassen, wobei die Auswertemittel ausgestaltet sind, um abhängig von Messergebnissen des von dem Magnetfeldsensor (1) erfassten magnetischen Feldes eine Position der tragbaren Vorrichtung (30) zu bestimmen.

10. Tragbare Vorrichtung nach Anspruch 9,
**dadurch gekennzeichnet,**
**dass** die tragbare Vorrichtung zur Durchführung eines Verfahrens nach einem der Ansprüche 1-8 ausgestaltet ist.

11. System, welches ein Fahrzeug (10), eine tragbare Vorrichtung (30) und Auswertemittel (5) umfasst,
wobei das Fahrzeug (10) mindestens eine Antenne (2) umfasst, um ein elektromagnetisches Feld zu erzeugen,
wobei die tragbare Vorrichtung (30) einen Magnetfeldsensor (1) umfasst,
wobei der Magnetfeldsensor (1) ausgestaltet ist, um ein Magnetfeldanteil des elektromagnetischen Feldes zu erfassen, und
wobei die Auswertemittel (5) ausgestaltet sind, um abhängig von Messergebnissen des von dem Magnetfeldsensor (1) erfassten Magnetfeldanteils eine Position der tragbaren Vorrichtung (30) relativ zu dem Fahrzeug (10) zu bestimmen.

12. System nach Anspruch 11,
**dadurch gekennzeichnet,**
**dass** die Auswertemittel (5) in der tragbaren Vorrichtung (30) angeordnet sind, oder dass die Auswertemittel (5) in dem Fahrzeug (10) angeordnet sind und die tragbare Vorrichtung Sendemittel (6) umfasst, um die Messergebnisse des Magnetfeldsensors (1) an das Fahrzeug (10) zu senden.

13. System nach Anspruch 11 oder 12,
**dadurch gekennzeichnet,**
**dass** das System (40) zur Durchführung des Verfahrens nach einem der Ansprüche 1-8 ausgestaltet ist.

14. Computerprogrammprodukt, welches ein Programm umfasst und direkt in einen Speicher (7) einer tragbaren Vorrichtung (30) ladbar ist, mit Programm-Mitteln, um alle Schritte eines Verfahrens auszuführen, wenn das Programm in einer Steuerung (5) der tragbaren Vorrichtung (30) ausgeführt wird,
wobei das Verfahren folgende Schritte umfasst:
Erfassen eines magnetischen Feldes mittels eines Magnetfeldsensors (1) der tragbaren Vorrichtung (30), und
Auswerten des magnetischen Feldes, um dadurch eine Position der tragbaren Vorrichtung (30) zu bestimmen.

15. Computerprogrammprodukt nach Anspruch 14,
**dadurch gekennzeichnet,**
**dass** das Verfahren die Merkmale der Verfahren nach einem der Ansprüche 2-8 umfasst.
